# EUROPEAN PATENT APPLICATION

(11) **EP 4 818 626 A1**
(43) Date of publication of application: **07.10.2026**
(21) Application number: 23960230.3
(22) Date of filing: 01.12.2023
(51) Int. Cl.: F28F 19/06, B23K 1/00, F25B 39/00, F28D 1/053, F28F 1/30

(54) **HEAT EXCHANGER, AIR CONDITIONING DEVICE PROVIDED WITH HEAT EXCHANGER, AND METHOD FOR MANUFACTURING HEAT EXCHANGER**

(71) Applicant: Mitsubishi Electric Corporation, Tokyo 100-8310 (JP)
(72) Inventor: CHIKAISHI, Masahiro, Tokyo 100-8310 (JP); KURIKI, Hironori, Tokyo 100-8310 (JP); KAWABATA, Ryohei, Tokyo 100-8310 (JP); NAKAJIMA, Takashi, Tokyo 100-8310 (JP)
(74) Representative: Witte, Weller & Partner Patentanwälte mbB
(86) International application number: PCT/JP2023/043111
(87) International publication number: WO 2025/115213

(57) **Abstract**

A heat exchanger includes a plurality of heat transfer tubes each inside which a flow passage through which refrigerant flows is formed and disposed such that the heat transfer tubes are spaced from each other in a left-right direction perpendicular to an up-down direction that is defined as a tube extension direction and a front-rear direction that is an airflow direction, fins each disposed between two of the heat transfer tubes that are adjacent to each other in the left-right direction and joined to the two of the heat transfer tubes disposed on left and right, an upper header in which upper end portions of the heat transfer tubes are inserted, and a lower header in which lower end portions of the heat transfer tubes are inserted. The heat transfer tubes are designed to have a low potential relative to the fins, with the potential difference between the heat transfer tubes and the fins joined with each other being greater in lower portions than in other portions in the up-down direction.

## Description

### Technical Field

The present disclosure relates to a heat exchanger provided with a plurality of heat transfer tubes and fins, an air-conditioning apparatus provided with the heat exchanger, and a method of manufacturing the heat exchanger.

### Background Art

Some heat exchanger inhibits corrosion of heat transfer tubes (for example, refer to Patent Literature 1). Patent Literature 1 discloses a configuration in which sacrificial layers are provided on the surfaces of the heat transfer tubes and the thicknesses of the sacrificial layers differ between an indoor heat exchanger and an outdoor heat exchanger. Also, a configuration is disclosed in which the thickness of the sacrificial layer differs for each location in the heat exchanger such that, for example, the thickness of the sacrificial layer at a portion where air that contains a large amount of salt, which is a corrosion factor, flows is larger than that at a portion where air that contains a small amount of salt flows. Such a configuration thus provided inhibits corrosion of the heat transfer tubes at portions prone to corrosion.

### Citation List

### Patent Literature

Patent Literature 1: Japanese Unexamined Patent Application Publication No. 2023-51137

### Summary of Invention

### Technical Problem

The degree of progression of corrosion of the heat exchanger is influenced by the presence and the absence of water, and corrosion tends to progress more easily at portions where water tends to remain. However, in Patent Literature 1, the tendency of water to remain at the heat exchanger is not taken into account, and corrosion thus progresses at portions where water tends to remain. A problem is consequently caused in that the heat exchange performance of the heat exchanger is reduced.

The present disclosure is made to solve such problems as described above and an object of the present disclosure is to provide a heat exchanger that inhibits the progression of corrosion at portions where water tends to remain and inhibits the reduction of heat exchange performance, an air-conditioning apparatus provided with the heat exchanger, and a method of manufacturing the heat exchanger.

### Solution to Problem

A heat exchanger according to an embodiment of the present disclosure includes a plurality of heat transfer tubes each inside which a flow passage through which refrigerant flows is formed and disposed such that the plurality of heat transfer tubes are spaced from each other in a left-right direction perpendicular to an up-down direction that is defined as a tube extension direction and a front-rear direction that is an airflow direction, fins each disposed between two of the plurality of heat transfer tubes that are adjacent to each other in the left-right direction and joined to the two of the plurality of heat transfer tubes disposed on left and right, an upper header in which upper end portions of the plurality of heat transfer tubes are inserted, and a lower header in which lower end portions of the plurality of heat transfer tubes are inserted. The plurality of heat transfer tubes are designed to have a low potential relative to the fins, with a potential difference between the plurality of heat transfer tubes and the fins joined with each other being greater in lower portions than in other portions in the up-down direction.

Also, an air-conditioning apparatus according to another embodiment of the present disclosure is provided with the heat exchanger described above.

Also, a method of manufacturing a heat exchanger according to still another embodiment of the present disclosure is a method of manufacturing the heat exchanger described above. The method includes thermally spraying zinc on surfaces of the plurality of heat transfer tubes, assembling the plurality of heat transfer tubes, the upper header, and the lower header, applying flux that contains zinc to surfaces of lower portions of all the plurality of heat transfer tubes, assembling the fins, applying flux that contains no zinc to entire surfaces of all the plurality of heat transfer tubes, and performing in-furnace brazing in an electric furnace. Advantageous Effects of Invention

In a heat exchanger, an air-conditioning apparatus provided with the heat exchanger, and a method of manufacturing the heat exchanger according to embodiments of the present disclosure, heat transfer tubes are designed to have a low potential relative to fins, and the potential difference between the heat transfer tubes and the fins at portions where water tends to remain is greater than the potential difference between the heat transfer tubes and the fins at portions where water tends not to remain. Corrosion progresses from a material that has a relatively low potential. Thus, the lower the potential of the heat transfer tubes relative to the fins, the more preferential the corrosion of the heat transfer tubes to the corrosion of the fins, and the fins are less likely to corrode. The heat exchanger has a structure provided with the heat transfer tubes, with the up-down direction defined as a tube extension direction, and the fins each disposed between two of the heat transfer tubes that are adjacent to each other in the left-right direction. Thus, water tends to remain at the fins, and water tends not to remain at the heat transfer tubes. For this reason, for portions of the heat exchanger where water tends to remain, as described above, the potential of the heat transfer tubes is made low relative to the fins. Thus, the corrosion of the heat transfer tubes is made preferential to the corrosion of the fins, and the fins are made less likely to corrode. With this configuration thus made, it is possible to inhibit the progression of corrosion at portions of the fins where water tends to remain and inhibit the reduction of heat exchange performance caused by the corrosion of the fins.

### Brief Description of Drawings

[Fig. 1] Fig. 1 is a refrigerant circuit diagram of an air-conditioning apparatus provided with a heat exchanger according to Embodiment 1.
[Fig. 2] Fig. 2 is a perspective view of the heat exchanger according to Embodiment 1.
[Fig. 3] Fig. 3 is a perspective view of the heat exchanger and a top-flow outdoor unit in which the heat exchanger is mounted according to Embodiment 1.
[Fig. 4] Fig. 4 is a front view that schematically illustrates the heat exchanger according to Embodiment 1.
[Fig. 5] Fig. 5 is a perspective view that schematically illustrates a heat exchanger and a ceiling-embedded indoor unit in which the heat exchanger is mounted according to a first modification of Embodiment 1.
[Fig. 6] Fig. 6 is a front view that schematically illustrates the heat exchanger according to the first modification of Embodiment 1.
[Fig. 7] Fig. 7 is a schematic cross-sectional view of a heat transfer tube of the heat exchanger according to Embodiment 1.
[Fig. 8] Fig. 8 is a schematic view that illustrates a joint portion where the heat transfer tube and a fin of the heat exchanger are joined to each other according to Embodiment 1.
[Fig. 9] Fig. 9 is a schematic view that illustrates a joint portion where a heat transfer tube and a fin of a heat exchanger are joined to each other according to a second modification of Embodiment 1.
[Fig. 10] Fig. 10 is a schematic view that illustrates the potential difference distribution at a heat exchanger core of the heat exchanger according to Embodiment 1.
[Fig. 11] Fig. 11 is a schematic view that illustrates a zinc concentration at a heat transfer tube and a fin at a central portion of the heat exchanger core of the heat exchanger according to Embodiment 1.
[Fig. 12] Fig. 12 is a schematic view that illustrates a zinc concentration at a heat transfer tube and a fin in the vicinity of a lower header of the heat exchanger core of the heat exchanger according to Embodiment 1.
[Fig. 13] Fig. 13 is a schematic view that illustrates the potential difference distribution at a heat exchanger core of a heat exchanger according to a third modification of Embodiment 1.
[Fig. 14] Fig. 14 is a schematic view that illustrates the potential difference distribution at a heat exchanger core of a heat exchanger according to Embodiment 2.
[Fig. 15] Fig. 15 is a schematic view that illustrates the potential difference distribution at a heat exchanger core of a heat exchanger according to Embodiment 3.
[Fig. 16] Fig. 16 is a diagram that illustrates the difference in surface zinc concentration between portions in the heat exchanger core of the heat exchanger according to Embodiment 1.

### Description of Embodiments

Embodiments of the present disclosure are described below with reference to drawings. Note that the present disclosure is not limited to the embodiments described below. Also, a relationship in size between components in the drawings illustrated below may differ from the actual one.

### Embodiment 1

### Configuration of Air-conditioning Apparatus 100

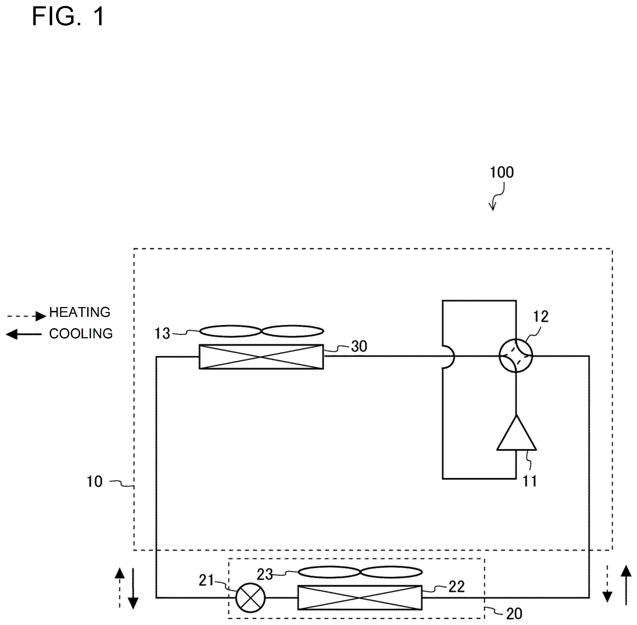

Fig. 1 is a refrigerant circuit diagram of an air-conditioning apparatus 100 provided with a heat exchanger 30 according to Embodiment 1. Note that solid arrows in Fig. 1 indicate refrigerant flow during a cooling operation, and dashed arrows indicate refrigerant flow during a heating operation.

As illustrated in Fig. 1, the heat exchanger 30 according to Embodiment 1 is mounted in an outdoor unit 10 of the air-conditioning apparatus 100, which includes the outdoor unit 10 and an indoor unit 20. The outdoor unit 10 includes, in addition to the heat exchanger 30, a compressor 11, a flow switching device 12, and a fan 13. The indoor unit 20 includes an expansion device 21, an indoor heat exchanger 22, and an indoor fan 23.

Also, the air-conditioning apparatus 100 is provided with a refrigerant circuit in which the compressor 11, the flow switching device 12, the heat exchanger 30, the expansion device 21, and the indoor heat exchanger 22 are connected to each other by refrigerant pipes and through which refrigerant circulates. This air-conditioning apparatus 100 is configured to perform both a cooling operation and a heating operation by switching the flow switching device 12.

The compressor 11 draws in low-temperature and low-pressure refrigerant, compresses the drawn refrigerant, and discharges high-temperature and high-pressure refrigerant. The compressor 11 is formed by, for example, an inverter compressor that has a capacity that is a transmission amount per unit time and is controlled by changing its operation frequency.

The flow switching device 12 is, for example, a four-way valve and switches between a cooling operation and a heating operation by switching directions in which refrigerant flows. When a cooling operation is to be performed, the flow switching device 12 is switched into a state indicated by solid lines in Fig. 1 and the discharge side of the compressor 11 and the heat exchanger 30 are connected to each other. Also, when a heating operation is to be performed, the flow switching device 12 is switched into a state indicated by dashed lines in Fig. 1 and the discharge side of the compressor 11 and the indoor heat exchanger 22 are connected to each other.

The heat exchanger 30 exchanges heat between outdoor air and refrigerant. During a cooling operation, the heat exchanger 30 functions as a condenser that transfers the heat of refrigerant to outdoor air and thus condenses the refrigerant. Also, during a heating operation, the heat exchanger 30 functions as an evaporator that evaporates refrigerant and, by resultant heat of evaporation generated at this time, cools outdoor air.

The fan 13 is a component that supplies outdoor air to the heat exchanger 30, and, by its rotational speed being controlled, the amount of air transmitted to the heat exchanger 30 is adjusted.

The expansion device 21 is, for example, an electronic expansion valve that adjusts the opening degree of the valve and, by adjusting its opening degree, controls the pressure of refrigerant that flows into the heat exchanger 30 or the indoor heat exchanger 22. Note that the expansion device 21 is provided in the indoor unit 20 in Embodiment 1; however, it may be provided in the outdoor unit 10, and its installation location is not limited.

The indoor heat exchanger 22 exchanges heat between indoor air and refrigerant. During a cooling operation, the indoor heat exchanger 22 functions as an evaporator that evaporates refrigerant and, by resultant heat of evaporation generated at this time, cools outdoor air. Also, during a heating operation, the indoor heat exchanger 22 functions as a condenser that transfers the heat of refrigerant to outdoor air and thus condenses the refrigerant.

The indoor fan 23 is a component that supplies indoor air to the indoor heat exchanger 22, and, by its rotational speed being controlled, the amount of air transmitted to the indoor heat exchanger 22 is adjusted.

### Configuration of Heat Exchanger 30

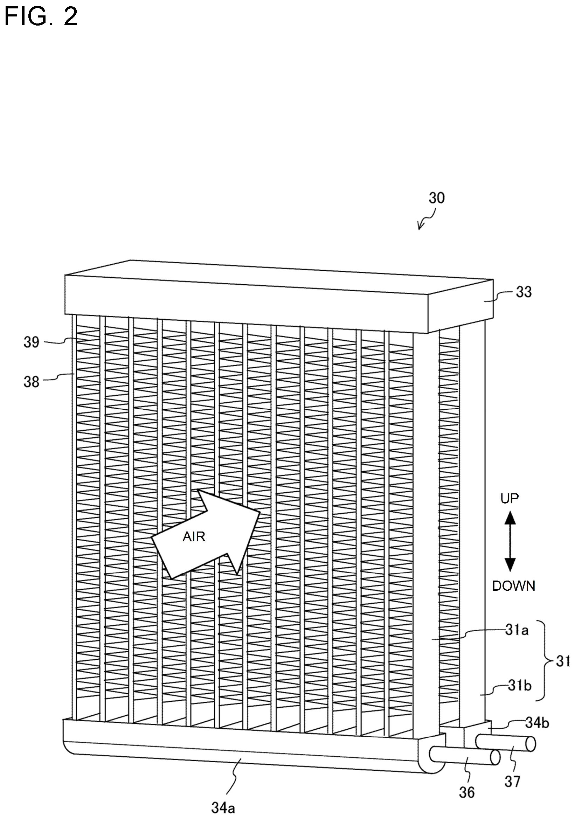

Fig. 2 is a perspective view of the heat exchanger 30 according to Embodiment 1. Note that a hollow arrow in Fig. 2 indicates an air flow generated by the fan 13.

As illustrated in Fig. 2, the heat exchanger 30 has a plurality of heat exchanger cores 31 in the direction in which air flows. Specifically, the heat exchanger 30 has a first heat exchanger core 31a located windward and a second heat exchanger core 31b located leeward. However, the number of the heat exchanger cores 31 is not limited to the number described above, and the heat exchanger 30 may have one or three or more of the heat exchanger cores 31. The heat exchanger core 31 has a plurality of heat transfer tubes 38 and a plurality of fins 39.

The heat transfer tubes 38 are disposed in parallel with each other in the left-right direction (horizontal direction) with spaces in between so that air generated by the fan 13 flows through, and refrigerant flows in the up-down direction (vertical direction) through the insides of the tubes, which extend in the up-down direction (vertical direction). The fins 39 are components that improve heat exchange efficiency between air and refrigerant, are each connected between the heat transfer tubes 38, which are adjacent to each other, and transfer heat to the heat transfer tubes 38. Note that the heat transfer tube 38 according to Embodiment 1 is a flat tube; however, it is not limited to a flat tube and may be, for example, a circular tube. Also, the fin 39 according to Embodiment 1 is a corrugated fin; however, it is not limited to a corrugated fin and may be, for example, a plate fin.

At the lower end portion of the first heat exchanger core 31a, a first lower header 34a is provided. To the first lower header 34a, the lower end portions of the heat transfer tubes 38 of the first heat exchanger core 31a are directly inserted. The first lower header 34a is connected to the refrigerant circuit of the air-conditioning apparatus 100 via a liquid pipe 36. The first lower header 34a is also referred to as a liquid header. Note that, at a portion of the first lower header 34a at which the liquid pipe 36 is connected, an opening (not illustrated) is formed. The first lower header 34a allows low-temperature and low-pressure two-phase refrigerant to flow into the heat exchanger 30 during a heating operation and allows low-temperature and high-pressure liquid refrigerant, whose heat is exchanged at the heat exchanger 30, to flow out to the refrigerant circuit during a cooling operation.

At the lower end portion of the second heat exchanger core 31b, a second lower header 34b is provided. To the second lower header 34b, the lower end portions of the heat transfer tubes 38 of the second heat exchanger core 31b are directly inserted. Also, the second lower header 34b is disposed parallel to the first lower header 34a. The second lower header 34b is connected to the refrigerant circuit of the air-conditioning apparatus 100 via a gas pipe 37. The second lower header 34b is also referred to as a gas header. Note that, at a portion of the second lower header 34b at which the gas pipe 37 is connected, an opening (not illustrated) is formed. The second lower header 34b allows high-temperature and high-pressure gas refrigerant from the compressor 11 to flow into the heat exchanger 30 during a cooling operation and allows low-temperature and low-pressure gas refrigerant, whose heat is exchanged at the heat exchanger 30, to flow out to the refrigerant circuit during a heating operation.

That is, in the heat exchanger 30, during a cooling operation, an inlet for refrigerant corresponds to the gas pipe 37, which is connected to the second lower header 34b, and an outlet for refrigerant corresponds to the liquid pipe 36, which is connected to the first lower header 34a. Also, during a heating operation, an inlet for refrigerant corresponds to the liquid pipe 36, which is connected to the first lower header 34a, and an outlet for refrigerant corresponds to the gas pipe 37, which is connected to the second lower header 34b.

At the upper end portions of the first heat exchanger core 31a and the second heat exchanger core 31b, an upper header 33 is provided in which the upper end portions of the plurality of heat transfer tubes 38, which are inserted in the first lower header 34a and the second lower header 34b, are inserted. This upper header 33 is an inter-column header that allows refrigerant to flow between the heat transfer tubes 38 of the first heat exchanger core 31a and the heat transfer tubes 38 of the second heat exchanger core 31b. Note that, hereinafter, the first lower header 34a and the second lower header 34b are collectively referred to as lower headers 34.

The plurality of heat transfer tubes 38, the fins 39, the lower headers 34, the upper header 33, the liquid pipe 36, and the gas pipe 37 are all made of aluminum and joined to each other by brazing.

The heat exchanger 30 is manufactured by assembling the heat transfer tubes 38, which have surfaces thermally sprayed with zinc, the fins 39, the lower headers 34, and the upper header 33, by then applying flux to the entire surfaces of the heat transfer tubes 38, the lower headers 34, and the upper header 33, and by performing in-furnace brazing in an electric furnace. Note that, for the fins 39, the lower headers 34, and the upper header 33, clad material or other similar material that has brazing material present on its surface may be used.

### Cooling Operation

High-temperature and high-pressure gas refrigerant discharged by the compressor 11 flows into the heat exchanger 30 via the flow switching device 12. The high-temperature and high-pressure gas refrigerant that has flowed into the heat exchanger 30 condenses while exchanging heat with outdoor air introduced by the fan 13 and transferring heat. The refrigerant thus becomes low-temperature and high-pressure liquid refrigerant and flows out from the heat exchanger 30. At this time, refrigerant that flows in the heat exchanger 30 flows sequentially through the gas pipe 37, the second lower header 34b, the second heat exchanger core 31b, the upper header 33, the first heat exchanger core 31a, the first lower header 34a, and the liquid pipe 36. The low-temperature and high-pressure liquid refrigerant that has flowed out from the heat exchanger 30 is decompressed by the expansion device 21 into low-temperature and low-pressure two-phase gas-liquid refrigerant and flows into the indoor heat exchanger 22. The low-temperature and low-pressure two-phase gas-liquid refrigerant that has flowed into the indoor heat exchanger 22 evaporates while exchanging heat with indoor air introduced by the indoor fan 23 and receiving heat. The refrigerant thus cools the indoor air, becomes low-temperature and low-pressure gas refrigerant, and flows out from the indoor heat exchanger 22. The low-temperature and low-pressure gas refrigerant that has flowed out from the indoor heat exchanger 22 is drawn into the compressor 11 and becomes high-temperature and high-pressure gas refrigerant again.

### Heating Operation

High-temperature and high-pressure gas refrigerant discharged by the compressor 11 flows into the indoor heat exchanger 22 via the flow switching device 12. The high-temperature and high-pressure gas refrigerant that has flowed into the indoor heat exchanger 22 condenses while exchanging heat with indoor air introduced by the indoor fan 23 and transferring heat. The refrigerant thus heats the indoor air, becomes low-temperature and high-pressure liquid refrigerant, and flows out from the indoor heat exchanger 22. The low-temperature and high-pressure liquid refrigerant that has flowed out from the indoor heat exchanger 22 is decompressed by the expansion device 21 into low-temperature and low-pressure two-phase gas-liquid refrigerant and flows into the heat exchanger 30. The low-temperature and low-pressure two-phase gas-liquid refrigerant that has flowed into the heat exchanger 30 evaporates while exchanging heat with outdoor air introduced by the fan 13 and receiving heat. The refrigerant thus becomes low-temperature and low-pressure gas refrigerant and flows out from the heat exchanger 30. At this time, refrigerant that flows in the heat exchanger 30 flows sequentially through the liquid pipe 36, the first lower header 34a, the first heat exchanger core 31a, the upper header 33, the second heat exchanger core 31b, the second lower header 34b, and the gas pipe 37. The low-temperature and low-pressure gas refrigerant that has flowed out from the heat exchanger 30 is drawn into the compressor 11 and becomes high-temperature and high-pressure gas refrigerant again.

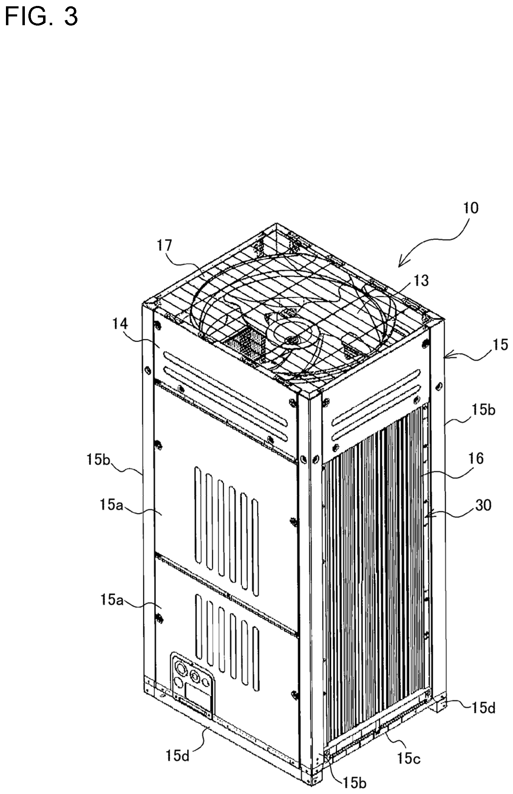

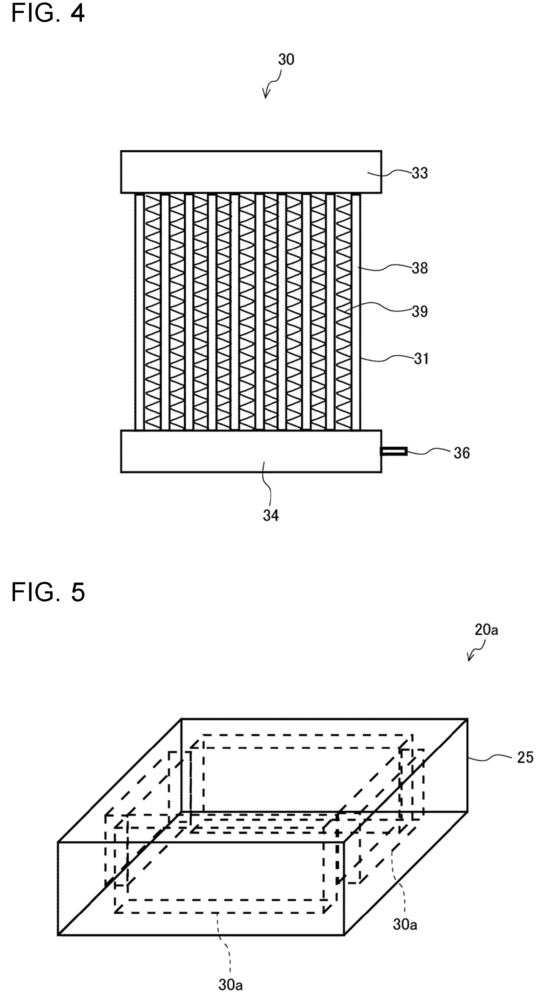

Fig. 3 is a perspective view of the heat exchanger 30 and the top-flow outdoor unit 10 in which the heat exchanger 30 is mounted according to Embodiment 1. Fig. 4 is a front view that schematically illustrates the heat exchanger 30 according to Embodiment 1. As illustrated in Fig. 3, the heat exchanger 30 according to Embodiment 1 is mounted, for example, in the top-flow outdoor unit 10.

As illustrated in Fig. 3, the outdoor unit 10 includes a casing 15 formed in a vertically long box shape, the heat exchanger 30 provided along an outer surface of the casing 15, and the fan 13 provided inside the upper portion of the casing 15. Furthermore, the casing 15 includes a bottom plate 15c, which forms the bottom surface, a pair of support legs 15d, which support the bottom plate 15c, four pillar portions 15b, which extend upward from the four corners of the bottom plate 15c, front panels 15a, which cover a front opening, and a fan casing 14 provided around the fan 13.

Also, in the casing 15, an inlet port 16, through which air is introduced inside, is formed in the left and right side surfaces and the rear surface among the outer circumferential surfaces, with four corners defined by the four pillar portions 15b. The heat exchanger 30 is disposed along the inlet port 16. That is, in the casing 15, three pieces of the heat exchanger 30 are disposed. The heat exchanger 30 is a component that allows refrigerant supplied to the heat exchanger 30 and air that passes through the heat exchanger 30 to exchange heat. Also, as illustrated in Fig. 4, the heat exchanger 30 has a vertically long rectangular shape in the front view.

As illustrated in Fig. 3, in the casing 15, the two front panels 15a, which are design metal sheets, are vertically provided at the front surface side among the outer circumferential surfaces, with four corners defined by the four pillar portions 15b. The front surface of the casing 15 is closed off by the front panels 15a. The front panel 15a is fixed to the pillar portions 15b at the left and right side edge portions by fastening components such as screws.

Also, in the lower portion inside the casing 15, internal components such as the compressor 11 that form the refrigerant circuit are installed. It is possible to maintain the internal components of the outdoor unit 10 such as the compressor 11 by opening the inside with the front panels 15a detached from the casing 15.

At the top surface of the casing 15, a blowout port 17 is formed. The fan 13 is disposed inside the casing 15 and positioned directly below the blowout port 17. The fan 13 is formed by, for example, a propeller fan and is driven by an unillustrated motor. When the fan 13 is thus driven, air drawn from the inlet port 16 into the casing 15 is caused to pass through the heat exchanger 30, exchange heat with refrigerant, and then be discharged through the fan 13 and out from the blowout port 17. The fan 13 is surrounded by the fan casing 14, which is attached to the casing 15. The fan casing 14 is a component disposed above the front panels 15a and the heat exchanger 30 among the outer circumferential surfaces, with four corners defined by the four pillar portions 15b and that surrounds the fan 13.

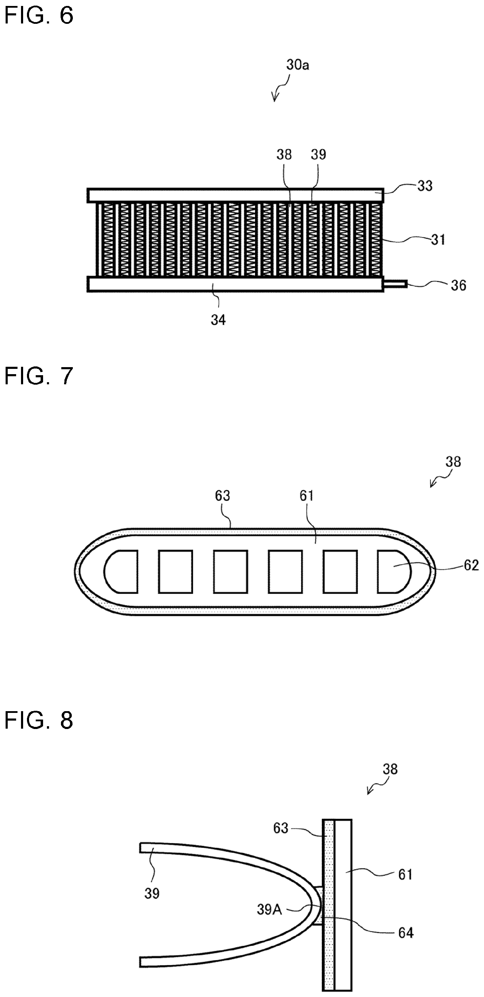

Fig. 5 is a perspective view that schematically illustrates a heat exchanger 30a and a ceiling-embedded indoor unit 20a in which the heat exchanger 30a is mounted according to a first modification of Embodiment 1. Fig. 6 is a front view that schematically illustrates the heat exchanger 30a according to the first modification of Embodiment 1. Note that, as illustrated in Fig. 5, the heat exchanger 30a may be mounted, for example, in the ceiling-embedded indoor unit 20a. In this case, the indoor unit 20a is provided with a casing 25 formed in a horizontally long box shape. Also, the heat exchanger 30a has two independent pieces, which each have an L-shape in plan view, and is mounted inside the casing 25 such that the pieces of the heat exchanger 30a form a rectangular shape in plan view. Note that the piece of the heat exchanger 30a does not strictly have to have an L-shape in plan view. Also, the heat exchanger 30a may have four independent pieces, which each have an I-shape in plan view, and may be mounted inside the casing 25 such that the pieces of the heat exchanger 30a form a rectangular shape in plan view. Also, two or four independent pieces of the heat exchanger 30a do not strictly have to form a rectangular shape in plan view. Also, as illustrated in Fig. 6, the heat exchanger 30a has a horizontally long rectangular shape in the front view.

Fig. 7 is a schematic cross-sectional view of the heat transfer tube 38 of the heat exchanger 30 according to Embodiment 1. As illustrated in Fig. 7, the heat transfer tube 38 according to Embodiment 1 is a flat tube and has a rectangular shape with rounded corners in plan view. The heat transfer tube 38 has a core component 61, inside which a plurality of flow passages 62 for refrigerant are formed along the longitudinal direction, and a zinc sacrificial layer 63 formed on the outer surface of the core component 61. The zinc sacrificial layer 63 is formed in the process of in-furnace brazing by zinc diffusing into the heat transfer tube 38. The zinc sacrificial layer 63 with a thickness of several tens to several hundreds of micrometers is formed on the surface of the heat transfer tube 38. Also, the zinc sacrificial layer 63 thus formed by diffusion has a higher zinc concentration toward the surface side of the sacrificial layer. The zinc sacrificial layer 63 is formed with the maximum surface zinc concentration of several wt% inside the sacrificial layer.

Fig. 8 is a schematic view that illustrates a joint portion where the heat transfer tube 38 and the fin 39 of the heat exchanger 30 are joined to each other according to Embodiment 1. The fin 39 according to Embodiment 1 is a corrugated fin. As illustrated in Fig. 8, the fin 39, which is a corrugated fin, is provided with a mountain portion 39A, which projects to the heat transfer tube 38, and the mountain portion 39A is brazed and joined at a brazed portion 64 on the surface of the heat transfer tube 38. As the material of the corrugated fin, a material to which several wt%, for example, 0.75wt% of zinc is added is used. However, the zinc concentration of the material of the corrugated fin is not limited to 0.75wt%. Note that Fig. 8 indicates only the right joint portion where the heat transfer tube 38 and the fin 39 are joined to each other; however, a joint portion is also present on the left and has the same arrangement.

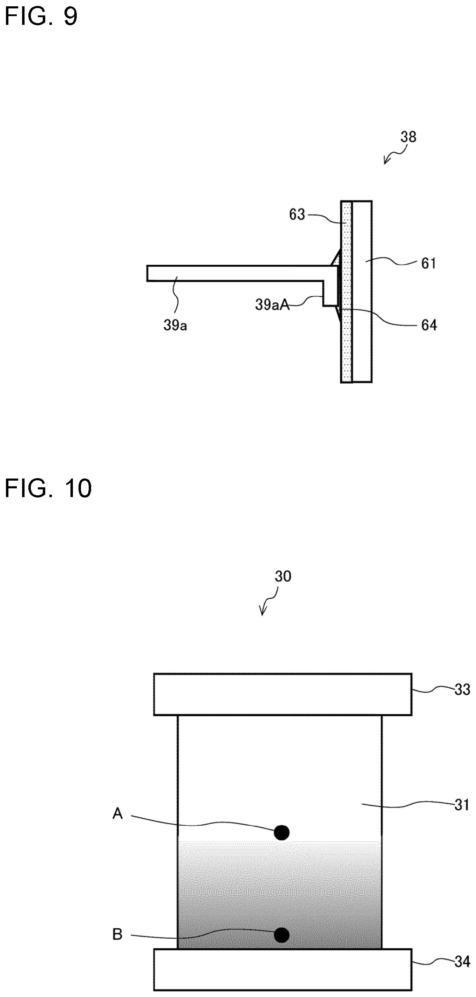

Fig. 9 is a schematic view that illustrates a joint portion where a heat transfer tube 38 and a fin 39a of a heat exchanger 30 are joined to each other according to a second modification of Embodiment 1. Note that the fin 39a may be a plate fin, and, in this case, as illustrated in Fig. 9, the fin 39a, which is a plate fin, is provided with a flange portion 39aA, which extends in the same direction as the heat transfer tube 38 and downward, and the flange portion 39aA is brazed and joined at a brazed portion 64 on the surface of the heat transfer tube 38. As the material of the plate fin, a material to which several wt%, for example, 0.75wt% of zinc is added is used. However, the zinc concentration of the material of the plate fin is not limited to 0.75wt%. Note that Fig. 9 indicates only the right joint portion where the heat transfer tube 38 and the fin 39 are joined to each other; however, a joint portion is also present on the left and has the same arrangement.

The heat exchanger 30 is designed such that the lower the portion, where attached moisture tends to remain, the greater the potential difference between the heat transfer tube 38 and the fin 39. Here, the lower portion of the heat exchanger 30 is a portion where, when water is discharged out from the system of the heat exchanger 30, water and the heat exchanger 30 are in contact with each other for a long time and moisture tends to remain within the surface of the heat exchanger 30.

Fig. 10 is a schematic view that illustrates the potential difference distribution at the heat exchanger core 31 of the heat exchanger 30 according to Embodiment 1. As illustrated in Fig. 10, in the heat exchanger core 31, the closer to the lower header 34 the position, the greater the potential difference between the heat transfer tube 38 and the fin 39. That is, in Embodiment 1, in the heat exchanger core 31, the potential difference between the heat transfer tube 38 and the fin 39 is designed to vary in the up-down direction (vertical direction). Here, Fig. 10 indicates the distribution of the potential difference between the heat transfer tube 38 and the fin 39 in the heat exchanger core 31 by shades of color. The shades of color in the heat exchanger core 31 indicate that the darker the area, the greater the potential difference between the heat transfer tube 38 and the fin 39. That is, from the central portion toward the lower portion of the heat exchanger core 31, the potential difference between the heat transfer tube 38 and the fin 39 increases. Such a potential difference is designed by making the surface zinc concentration of the heat transfer tube 38 positioned at the lower portion of the heat exchanger core 31 higher than the concentration of the heat transfer tube 38 positioned at the central portion. Note that the potential of the heat transfer tube 38 relative to the fin 39 decreases toward the lower portion of the heat exchanger core 31.

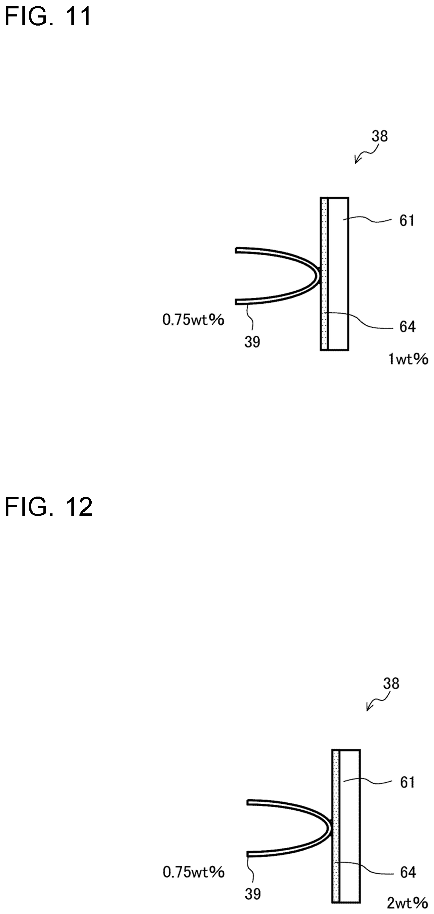

Fig. 11 is a schematic view that illustrates a zinc concentration at the heat transfer tube 38 and the fin 39 at the central portion of the heat exchanger core 31 of the heat exchanger 30 according to Embodiment 1. Fig. 12 is a schematic view that illustrates a zinc concentration at the heat transfer tube 38 and the fin 39 in the vicinity of the lower header 34 of the heat exchanger core 31 of the heat exchanger 30 according to Embodiment 1.

Next, the zinc concentrations and the potential differences at some portions of the heat exchanger core 31 are described below. Fig. 11 indicates the zinc concentration at the heat transfer tube 38 and the fin 39 at the central portion of the heat exchanger core 31 of the heat exchanger 30 (portion A illustrated in Fig. 10). In Fig. 11, the zinc concentration at the fin 39 is designed to be 0.75wt% and the surface zinc concentration of the heat transfer tube 38 is designed to be 1wt%. Fig. 12 indicates the zinc concentration at the heat transfer tube 38 and the fin 39 in the vicinity of the lower header 34 of the heat exchanger core 31 of the heat exchanger 30 (portion B illustrated in Fig. 10). In Fig. 12, the zinc concentration at the fin 39 is designed to be 0.75wt% and the surface zinc concentration of the heat transfer tube 38 is designed to be 2wt%. As described above, the surface zinc concentration of the heat transfer tube 38 positioned at the lower portion of the heat exchanger core 31 is designed to be higher than that at the central portion, and the potential of the heat transfer tube 38 relative to the fin 39 is thus lower at positions closer to the lower header 34 in the heat exchanger core 31. The potential difference in this case is, for example, 25 mV at the central portion and 105 mV in the vicinity of the lower header 34 of the heat exchanger core 31. As described above, the potential difference between the heat transfer tube 38 and the fin 39 is greater at the lower portion than at the central portion of the heat exchanger core 31.

At the surface of the heat exchanger core 31, corrosion progresses from a material that has a relatively low potential. With this property considered, as in Embodiment 1, in a case where the surface zinc concentration of the heat transfer tube 38 is made higher than the zinc concentration of the fin 39, the potential of the heat transfer tube 38 relative to the fin 39 is low, the corrosion of the heat transfer tube 38 is preferential to the corrosion of the fin 39, and the fin 39 is less likely to corrode. Also, the heat exchanger 30 has a structure provided with the heat transfer tubes 38, with the up-down direction (vertical direction) defined as the tube extension direction, and the fins 39 each disposed between two of the heat transfer tubes 38 that are adjacent to each other in the left-right direction (horizontal direction). Thus, water tends to remain at the fins 39, and water tends not to remain at the heat transfer tubes 38. With this arrangement considered, the surface zinc concentration of the heat transfer tube 38 is designed to be greater at portions lower in the heat exchanger core 31. With this arrangement thus made, the potential difference between the heat transfer tube 38 and the fin 39 is designed to be greater at lower portions, where attached moisture tends to remain, the corrosion of the heat transfer tube 38 is preferential to the corrosion of the fin 39, and the fin 39 is less likely to corrode. As a result, it is possible to inhibit the progression of corrosion at portions of the fins 39 where water tends to remain and inhibit the reduction of heat exchange performance caused by the corrosion of the fins 39.

As described above, in the heat exchanger 30 according to Embodiment 1, at lower portions, the corrosion of the heat transfer tube 38 is preferential to the corrosion of the fin 39, and the fin 39 is less likely to corrode. Therefore, it is possible to inhibit the reduction of heat exchange performance caused by the corrosion of the fins 39. In particular, it is more effective in the heat exchanger 30 in which the heat transfer tubes 38 are disposed in the up-down direction (vertical direction) defined as the tube extension direction, since moisture tends to remain at the fins 39. Note that the configuration of Embodiment 1 may naturally be applied to a heat exchanger that has a structure (not illustrated) provided with a discharge hole or a louver that allows water on the upper surface of a fin to drop to the lower portion and that has the corrugated fin with thus improved drainage performance.

Note that, in a case where the corrosion of the heat transfer tube 38 is made preferential to the corrosion of the fin 39, the potential difference between the heat transfer tube 38 and the fin 39 is preferably higher than or equal to 50mV. In Embodiment 1, the zinc concentration at an area of the heat transfer tube 38 where the corrosion of the heat transfer tube 38 is desired to be preferential to the corrosion of the fin 39 is preferably higher than or equal to 1.3wt%. With this design, it is possible to make the potential difference between the heat transfer tube 38 and the fin 39 higher than or equal to 50 mV.

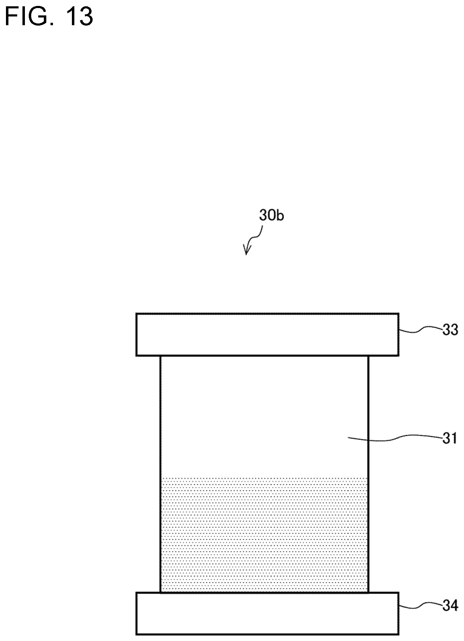

Fig. 13 is a schematic view that illustrates the potential difference distribution at a heat exchanger core 31 of a heat exchanger 30b according to a third modification of Embodiment 1. Note that Fig. 13 indicates the distribution of the potential difference between a heat transfer tube 38 and a fin 39 in the heat exchanger core 31 by shades of color. The potential difference at the heat exchanger core 31 of the heat exchanger 30 according to Embodiment 1 is described, as illustrated in Fig. 10, with an example in which the distribution is illustrated by gradation; however, the potential difference is not limited to this example. As illustrated in Fig. 13, the potential difference at the heat exchanger core 31 may not have gradation, and the potential difference between the heat transfer tube 38 and the fin 39 from the lower portion to the central portion may be greater than the potential difference between the heat transfer tube 38 and the fin 39 from the upper portion to the central portion of the heat exchanger 30b. In this case, in the heat exchanger 30b, the potential difference between the heat transfer tube 38 and the fin 39 is the same within a range from the lower portion to the central portion, and the potential difference between the heat transfer tube 38 and the fin 39 is the same within a range from the upper portion to the central portion. With such a configuration, the same effects as those of the heat exchanger 30 described above are also obtained.

As described above, the heat exchanger 30 according to Embodiment 1 includes the plurality of heat transfer tubes 38 each inside which the flow passage 62 through which refrigerant flows is formed and disposed such that the heat transfer tubes 38 are spaced from each other in a left-right direction perpendicular to an up-down direction that is defined as a tube extension direction and a front-rear direction that is an airflow direction, the fins 39 each disposed between two of the heat transfer tubes 38 that are adjacent to each other in the left-right direction and joined to the two of the heat transfer tubes 38 disposed on left and right, the upper header 33 in which upper end portions of the heat transfer tubes 38 are inserted, and the lower headers 34 in which lower end portions of the heat transfer tubes 38 are inserted. The heat transfer tubes 38 are designed to have a low potential relative to the fins 39, with the potential difference between the heat transfer tubes 38 and the fins 39 joined with each other being greater in lower portions than in other portions in the up-down direction.

In the heat exchanger 30 according to Embodiment 1, the heat transfer tubes 38 are designed to have a low potential relative to the fins 39, and the potential difference between the heat transfer tubes 38 and the fins 39 at portions where water tends to remain is greater than the potential difference between the heat transfer tubes 38 and the fins 39 at portions where water tends not to remain. Corrosion progresses from a material that has a relatively low potential. Thus, the lower the potential of the heat transfer tubes 38 relative to the fins 39, the more preferential the corrosion of the heat transfer tubes 38 to the corrosion of the fins 39, and the fins 39 are less likely to corrode. The heat exchanger 30 has a structure provided with the heat transfer tubes 38, with the up-down direction defined as a tube extension direction, and the fins 39 each disposed between two of the heat transfer tubes 38 that are adjacent to each other in the left-right direction. Thus, water tends to remain at the fins 39, and water tends not to remain at the heat transfer tubes 38. For this reason, for portions of the heat exchanger 30 where water tends to remain, as described above, the potential of the heat transfer tubes 38 is made low relative to the fins 39. Thus, the corrosion of the heat transfer tubes 38 is made preferential to the corrosion of the fins 39, and the fins 39 are made less likely to corrode. As a result, it is possible to inhibit the progression of corrosion at portions of the fins 39 where water tends to remain and inhibit the reduction of heat exchange performance caused by the corrosion of the fins 39.

### Embodiment 2

Embodiment 2 is described below. The same elements as those in Embodiment 1 are not described, and portions that are the same as or equivalent to the portions in Embodiment 1 are denoted by the same reference signs.

A heat exchanger 30c according to Embodiment 2 has almost the same configuration as the heat exchanger 30 according to Embodiment 1 and differs in a region in which the potential difference between a heat transfer tube 38 and a fin 39 is large.

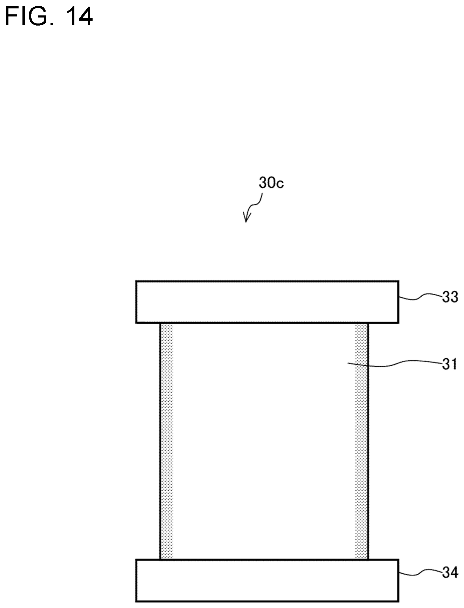

Fig. 14 is a schematic view that illustrates the potential difference distribution at a heat exchanger core 31 of the heat exchanger 30c according to Embodiment 2. Note that Fig. 14 indicates the distribution of the potential difference between the heat transfer tube 38 and the fin 39 in the heat exchanger core 31 by shades of color. In Embodiment 2, as illustrated in Fig. 14, in the heat exchanger core 31, the potential difference between the heat transfer tube 38 and the fin 39 is designed to vary in the left-right direction (horizontal direction). Here, the left side portion and the right side portion of the heat exchanger 30c are shaded by pillar portions 15b provided at four corners of a casing 15 of an outdoor unit 10, and attached moisture tends to remain. As a countermeasure, the potential difference between the heat transfer tube 38 and the fin 39 positioned in the vicinity of the pillar portions 15b, where attached moisture tends to remain, is made relatively large as compared with other portions.

Also, as in Embodiment 1, the potential of the heat transfer tube 38 relative to the fin 39 is designed to be low. As described above, the potential of the heat transfer tube 38 relative to the fin 39 is made low, and the potential difference between the heat transfer tube 38 and the fin 39 at the left side portion and the right side portion of a heat exchanger 30d positioned in the vicinity of the pillar portions 15b, where attached moisture tends to remain, is made relatively large as compared with other portions. With this arrangement thus made, the corrosion of the heat transfer tube 38 at a portion where attached moisture tends to remain is preferential to the corrosion of the fin 39, and the fin 39 is less likely to corrode. As a result, it is possible to inhibit the progression of corrosion at portions of the fins 39 where water tends to remain and inhibit the reduction of heat exchange performance caused by the corrosion of the fins 39.

As described above, the heat exchanger 30 according to Embodiment 2 includes the plurality of heat transfer tubes 38 each inside which a flow passage 62 through which refrigerant flows is formed and disposed such that the heat transfer tubes 38 are spaced from each other in a left-right direction perpendicular to an up-down direction that is defined as a tube extension direction and a front-rear direction that is an airflow direction, the fins 39 each disposed between two of the heat transfer tubes 38 that are adjacent to each other in the left-right direction and joined to the two of the heat transfer tubes 38 disposed on left and right, an upper header 33 in which upper end portions of the heat transfer tubes 38 are inserted, and lower headers 34 in which lower end portions of the heat transfer tubes 38 are inserted. The heat transfer tubes 38 are designed to have a low potential relative to the fins 39, with the potential difference between the heat transfer tubes 38 and the fins 39 joined with each other being greater in the left side portion and the right side portion than in other portions in the left-right direction.

In the heat exchanger 30 according to Embodiment 2, the heat transfer tubes 38 are designed to have a low potential relative to the fins 39, and the potential difference between the heat transfer tubes 38 and the fins 39 at portions where water tends to remain is greater than the potential difference between the heat transfer tubes 38 and the fins 39 at portions where water tends not to remain. Corrosion progresses from a material that has a relatively low potential. Thus, the lower the potential of the heat transfer tubes 38 relative to the fins 39, the more preferential the corrosion of the heat transfer tubes 38 to the corrosion of the fins 39, and the fins 39 are less likely to corrode. The heat exchanger 30 has a structure provided with the heat transfer tubes 38, with the up-down direction defined as a tube extension direction, and the fins 39 each disposed between two of the heat transfer tubes 38 that are adjacent to each other in the left-right direction. Thus, water tends to remain at the fins 39, and water tends not to remain at the heat transfer tubes 38. For this reason, for the left side portion and the right side portion of the heat exchanger 30 where water tends to remain, as described above, the potential of the heat transfer tubes 38 is made low relative to the fins 39. Thus, the corrosion of the heat transfer tubes 38 is made preferential to the corrosion of the fins 39, and the fins 39 are made less likely to corrode. With this configuration thus made, it is possible to inhibit the progression of corrosion at portions of the fins 39 where water tends to remain and inhibit the reduction of heat exchange performance caused by the corrosion of the fins 39.

### Embodiment 3

Embodiment 3 is described below. The same elements as those in Embodiments 1 and 2 are not described, and portions that are the same as or equivalent to the portions in Embodiments 1 and 2 are denoted by the same reference signs.

In a heat exchanger 30d according to Embodiment 3, the region in which the potential difference between the heat transfer tube 38 and the fin 39 is large according to Embodiment 1 and the region in which the potential difference between the heat transfer tube 38 and the fin 39 is large according to Embodiment 2 are combined with each other.

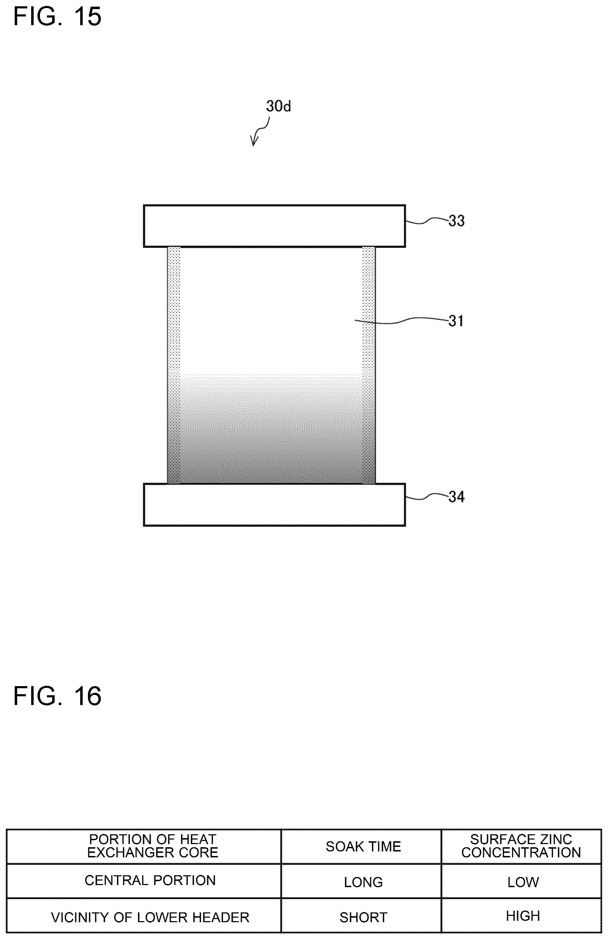

Fig. 15 is a schematic view that illustrates the potential difference distribution at a heat exchanger core 31 of the heat exchanger 30d according to Embodiment 3. Note that Fig. 15 indicates the distribution of the potential difference between the heat transfer tube 38 and the fin 39 in the heat exchanger core 31 by shades of color. The shades of color in the heat exchanger core 31 indicate that the darker the area, the greater the potential difference between the heat transfer tube 38 and the fin 39. In Embodiment 3, as illustrated in Fig. 15, in the heat exchanger core 31, the potential difference between the heat transfer tube 38 and the fin 39 is designed to vary in the up-down direction (vertical direction) and the left-right direction (horizontal direction). As described above, the potential difference between the heat transfer tube 38 and the fin 39 at the lower portion of the heat exchanger 30d, where attached moisture tends to remain, in the up-down direction (vertical direction) is made relatively large as compared with other portions, and the potential difference between the heat transfer tube 38 and the fin 39 at the left side portion and the right side portion of the heat exchanger 30d positioned in the vicinity of the pillar portions 15b, where attached moisture tends to remain, in the left-right direction (horizontal direction) is made relatively large as compared with other portions. Note that Fig. 15 illustrates gradation for the distribution of the potential difference at the heat exchanger core 31 in the up-down direction (vertical direction) as in Fig. 10; however, the distribution is not limited to gradation. The distribution of the potential difference at the heat exchanger core 31 may not be illustrated by gradation as in Fig. 13.

Also, as in Embodiment 1, the potential of the heat transfer tube 38 relative to the fin 39 is designed to be low. As described above, in addition to the lower portion of the heat exchanger 30d, where attached moisture tends to remain, the corrosion of the heat transfer tubes 38 at the left side portion and the right side portion, where attached moisture tends to remain, is preferential to the corrosion of the fin 39, and the fin 39 is less likely to corrode. With this configuration thus made, compared with Embodiment 1 and Embodiment 2, it is possible to further inhibit the progression of corrosion at portions of the fins 39 where water tends to remain and further inhibit the reduction of heat exchange performance caused by the corrosion of the fins 39.

As described above, the heat exchanger 30d according to Embodiment 3 includes the plurality of heat transfer tubes 38 each inside which a flow passage 62 through which refrigerant flows is formed and disposed such that the heat transfer tubes 38 are spaced from each other in a left-right direction perpendicular to an up-down direction that is defined as a tube extension direction and a front-rear direction that is an airflow direction, the fins 39 each disposed between two of the heat transfer tubes 38 that are adjacent to each other in the left-right direction and joined to the two of the heat transfer tubes 38 disposed on left and right, an upper header 33 in which upper end portions of the heat transfer tubes 38 are inserted, and lower headers 34 in which lower end portions of the heat transfer tubes 38 are inserted. The heat transfer tubes 38 are designed to have a low potential relative to the fins 39, with the potential difference between the heat transfer tubes 38 and the fins 39 joined with each other being greater in the lower portion than in other portions in the up-down direction and with the potential difference between the heat transfer tubes 38 and the fins 39 joined with each other being greater in the left side portion and the right side portion than in other portions in the left-right direction.

In the heat exchanger 30d according to Embodiment 3, it is possible to inhibit, in addition to the corrosion of the lower portion, where attached moisture tends to remain, the corrosion of the fins 39 at the left side portion and the right side portion, where attached moisture tends to remain. Therefore, compared with Embodiment 1 and Embodiment 2, it is possible to further inhibit the progression of corrosion at portions of the fins 39 where water tends to remain and further inhibit the reduction of heat exchange performance caused by the corrosion of the fins 39.

### Embodiment 4

Embodiment 4 is described below. The same elements as those in Embodiments 1 to 3 are not described, and portions that are the same as or equivalent to the portions in Embodiments 1 to 3 are denoted by the same reference signs.

In Embodiment 4, a method of manufacturing the heat exchanger 30 described in Embodiment 1 is described below. The method of manufacturing the heat exchanger 30 according to Embodiment 4 includes step 1 of thermally spraying zinc on the surfaces of the heat transfer tubes 38, step 2 of assembling the heat transfer tubes 38, the fins 39, the lower headers 34, and the upper header 33, step 3 of applying flux to the entire surfaces of the heat transfer tubes 38, the lower headers 34, and the upper header 33, and step 4 of transporting the assembly into an electric furnace and performing in-furnace brazing, and the heat exchanger 30 is manufactured by sequentially performing steps 1 to 4. Note that, in step 3, before the in-furnace brazing, flux that contains no zinc is applied to the entire surfaces of the heat transfer tubes 38 to remove an oxide film from aluminum surfaces and improve brazing joint strength. Also, the conditions of the in-furnace brazing in step 4 are not limited. For example, it is sufficient that the assembly is transported into an electric furnace and heated to a brazing temperature in a nitrogen atmosphere, and the temperature is then maintained for a required time, and subsequently, the assembly is cooled from the brazing temperature to room temperature.

The method of manufacturing the heat exchanger 30 according to Embodiment 4 includes, in addition to step 1 to step 4, step 0 of designing the heat capacity of the lower headers 34 disposed at the lower portions of the heat exchanger cores 31 of the heat exchanger 30 to be larger than the heat capacity of the heat transfer tubes 38 and the fins 39, that is, the heat capacity of the heat exchanger cores 31. This step 0 is performed before step 4. Note that, by making the thickness of the lower header 34 larger than the thickness of each of the heat transfer tubes 38 and the fins 39, which form the corresponding one of the heat exchanger cores 31, it is possible to make the heat capacity of the lower header 34 larger than that of the heat exchanger core 31.

Fig. 16 is a diagram that illustrates the difference in surface zinc concentration between portions in the heat exchanger core 31 of the heat exchanger 30 according to Embodiment 1. As illustrated in Fig. 16, during in-furnace brazing, the time during which a brazing material in the vicinity of the lower header 34 of the heat exchanger core 31 melts (hereinafter referred to as a soak time) is shorter than the soak time of the central portion of the heat exchanger core 31, which is away from the lower header 34. The time during which zinc diffuses on the surfaces of the heat transfer tubes 38 in the vicinity of the lower header 34, where the soak time is short, is shorter than that for the central portion. Therefore, it is possible to design the concentration of zinc, which is formed on the surface of the heat transfer tube 38 in the vicinity of the lower header 34 after in-furnace brazing, to be higher than that of the central portion. Conversely, the central portion of the heat exchanger core 31 has a longer soak time than the vicinity of the lower header 34, and the surface zinc concentration of the heat transfer tube 38 is lower.

As described above, by the method of manufacturing the heat exchanger 30 according to Embodiment 4, the surface zinc concentration of the heat transfer tubes 38 of the heat exchanger core 31 is higher at portions positioned in the vicinity of the lower header 34. That is, the potential difference in the heat exchanger core 31 is distributed as if in gradation. With this design, it is possible to provide differences in potential difference between the heat transfer tube 38 and the fin 39 among some portions of the heat exchanger core 31 and to manufacture the heat exchanger 30 described in Embodiment 1.

Note that, in step 0, the heat capacity of the lower headers 34, per se, which are components of the heat exchanger 30, is made large; however, the step is not limited to this method. For example, a component other than the components of the heat exchanger 30 may be used as a jig, and the jig may be attached to the lower headers 34 such that the heat capacity of the lower headers 34 is large. With this method, it is also possible to manufacture the same heat exchanger 30. Note that, as the jig, a metal that does not melt during in-furnace brazing, such as an aluminum block, may be used.

As a method of manufacturing the heat exchangers 30c and 30d described in Embodiments 2 and 3, the method includes, in addition to step 0 to step 4 or step 1 to step 4 described above, step 5 of attaching jigs to the left side portion and the right side portion of the heat exchanger core 31, whose heat capacity is desired to be large, in the vicinity of the pillar portions 15b provided at the four corners of the casing 15. This step 5 is performed before step 4. Furthermore, by performing step 0 to step 5 or step 1 to step 5, it is possible to manufacture the heat exchangers 30b and 30c.

Also, in addition to the manufacturing method described above, it is possible to manufacture the heat exchanger 30b described in the second modification of Embodiment 1 by use of flux that contains zinc. This manufacturing method includes, instead of step 2 described above, step 2-1, step 2-2, and step 2-3. Step 2-1 is a step of assembling the heat transfer tubes 38, the lower headers 34, and the upper header 33. Step 2-2 is a step of applying flux that contains zinc to the surfaces of the lower portions of all the heat transfer tubes 38. Step 2-3 is a step of assembling the fin 39 to the assembly. These steps, which correspond to step 2-1, step 2-2, and step 2-3, are performed sequentially, and these steps are also performed between step 1 and step 3. In step 2-2, flux that contains zinc is applied to areas of the heat transfer tubes 38 whose surface zinc concentration is desired to be high, and, subsequently, by performing in-furnace brazing in step 4, the surface zinc concentration of the areas of the heat transfer tubes 38 to which the flux that contains zinc is applied becomes higher than that of areas to which flux that contains zinc is not applied. Therefore, it is possible to make the potential difference between the heat transfer tubes 38 and the fins 39 in the areas to which the flux that contains zinc is applied greater than that in areas to which flux that contains zinc is not applied. With this manufacturing method, it is possible to manufacture the heat exchanger 30b described in the second modification of Embodiment 1. Note that, in step 2-2, the areas to which the flux that contains zinc is applied may be changed from the surfaces of the lower portions of all the heat transfer tubes 38 at the heat exchanger cores 31 to the entire surfaces of the heat transfer tubes 38 at the left side portion and the right side portion of the heat exchanger cores 31. It is thus possible to manufacture the heat exchanger 30c described in Embodiment 2. Furthermore, in step 2-2, the areas to which the flux that contains zinc is applied may include, in addition to the surfaces of the lower portions of all the heat transfer tubes 38 at the heat exchanger cores 31, the entire surfaces of the heat transfer tubes 38 at the left side portion and the right side portion of the heat exchanger cores 31. It is thus possible to manufacture the heat exchanger 30d described in Embodiment 3.

Note that some heat exchanger has a configuration in which the thickness of the sacrificial layer differs for each location in the heat exchanger. For this reason, it is necessary to use multiple types of heat transfer tubes with different thicknesses of the sacrificial layers. Consequently, there is a problem in that manufacturing costs, that is, both the cost of the components per se and the cost at the time of assembly, are incurred. On the other hand, by the methods of manufacturing the heat exchangers 30, 30b, 30c, and 30d described in Embodiment 4, it is possible to achieve manufacture by use of a single type of the heat transfer tubes 38, without changing the types of the heat transfer tubes 38 to be used for respective locations of the heat exchanger cores 31 and thus reduce the manufacturing costs. Also, without changing the contents of step 4, it is possible to provide differences in potential difference between the heat transfer tubes 38 and the fins 39 among some portions of the heat exchanger cores 31.

### Reference Signs List

10: outdoor unit, 11: compressor, 12: flow switching device, 13: fan, 14: fan casing, 15: casing, 15a: front panel, 15b: pillar portion, 15c: bottom plate, 15d: support leg, 16: inlet port, 17: blowout port, 20: indoor unit, 20a: indoor unit, 21: expansion device, 22: indoor heat exchanger, 23: indoor fan, 25: casing, 30: heat exchanger, 30a: heat exchanger, 30b: heat exchanger, 30c: heat exchanger, 30d: heat exchanger, 31: heat exchanger core, 31a: first heat exchanger core, 31b: second heat exchanger core, 33: upper header, 34: lower header, 34a: first lower header, 34b: second lower header, 36: liquid pipe, 37: gas pipe, 38: heat transfer tube, 39: fin, 39A: mountain portion, 39a: fin, 39aA: flange portion, 61: core component, 62: flow passage, 63: zinc sacrificial layer, 64: brazed portion, 100: air-conditioning apparatus

## Claims

1. A heat exchanger comprising
a plurality of heat transfer tubes each inside which a flow passage through which refrigerant flows is formed and disposed such that the plurality of heat transfer tubes are spaced from each other in a left-right direction perpendicular to an up-down direction that is defined as a tube extension direction and a front-rear direction that is an airflow direction;
fins each disposed between two of the plurality of heat transfer tubes that are adjacent to each other in the left-right direction and joined to the two of the plurality of heat transfer tubes disposed on left and right;
an upper header in which upper end portions of the plurality of heat transfer tubes are inserted; and
a lower header in which lower end portions of the plurality of heat transfer tubes are inserted,
the plurality of heat transfer tubes being designed to have a low potential relative to the fins, with a potential difference between the plurality of heat transfer tubes and the fins joined with each other being greater in lower portions than in other portions in the up-down direction.

2. A heat exchanger comprising
a plurality of heat transfer tubes each inside which a flow passage through which refrigerant flows is formed and disposed such that the plurality of heat transfer tubes are spaced from each other in a left-right direction perpendicular to an up-down direction that is defined as a tube extension direction and a front-rear direction that is an airflow direction;
fins each disposed between two of the plurality of heat transfer tubes that are adjacent to each other in the left-right direction and joined to the two of the plurality of heat transfer tubes disposed on left and right;
an upper header in which upper end portions of the plurality of heat transfer tubes are inserted; and
a lower header in which lower end portions of the plurality of heat transfer tubes are inserted,
the plurality of heat transfer tubes being designed to have a low potential relative to the fins, with a potential difference between the plurality of heat transfer tubes and the fins joined with each other being greater in left side portions and right side portions than in other portions in the left-right direction.

3. The heat exchanger of claim 1, wherein the potential difference between the plurality of heat transfer tubes and the fins joined with each other is greater from central portions toward the lower portions in the up-down direction.

4. The heat exchanger of claim 1 or 3, wherein the potential difference between the plurality of heat transfer tubes and the fins joined with each other is greater in left side portions and right side portions than in other portions in the left-right direction.

5. An air-conditioning apparatus comprising the heat exchanger of any one of claims 1 to 4.

6. A method of manufacturing the heat exchanger of claim 1, the method comprising
thermally spraying zinc on surfaces of the plurality of heat transfer tubes;
assembling the plurality of heat transfer tubes, the upper header, and the lower header;
applying flux that contains zinc to surfaces of lower portions of all the plurality of heat transfer tubes;
assembling the fins;
applying flux that contains no zinc to entire surfaces of all the plurality of heat transfer tubes; and
performing in-furnace brazing in an electric furnace.

7. A method of manufacturing the heat exchanger of claim 2, the method comprising
thermally spraying zinc on surfaces of the plurality of heat transfer tubes;
assembling the plurality of heat transfer tubes, the upper header, and the lower header;
applying flux that contains zinc to entire surfaces of left side portions and right side portions of the plurality of heat transfer tubes;
assembling the fins;
applying flux that contains no zinc to entire surfaces of all the plurality of heat transfer tubes; and
performing in-furnace brazing in an electric furnace.

8. A method of manufacturing the heat exchanger of claim 3, the method comprising
designing a heat capacity of the lower header to be larger than a heat capacity of the plurality of heat transfer tubes and the fins;
thermally spraying zinc on surfaces of the plurality of heat transfer tubes;
assembling the plurality of heat transfer tubes, the fins, the upper header, and the lower header;
applying flux that contains no zinc to entire surfaces of all the plurality of heat transfer tubes; and
performing in-furnace brazing in an electric furnace.

9. A method of manufacturing the heat exchanger of claim 4 as dependent on claim 1, the method comprising
thermally spraying zinc on surfaces of the plurality of heat transfer tubes;
assembling the plurality of heat transfer tubes, the upper header, and the lower header;
applying flux that contains zinc to surfaces of lower portions of all the plurality of heat transfer tubes;
applying flux that contains zinc to entire surfaces of left side portions and right side portions of the plurality of heat transfer tubes;
assembling the fins;
applying flux that contains no zinc to entire surfaces of all the plurality of heat transfer tubes; and
performing in-furnace brazing in an electric furnace.

10. A method of manufacturing the heat exchanger of claim 4 as dependent on claim 3, the method comprising
designing a heat capacity of the lower header to be larger than a heat capacity of the plurality of heat transfer tubes and the fins;
thermally spraying zinc on surfaces of the plurality of heat transfer tubes;
assembling the plurality of heat transfer tubes, the upper header, and the lower header;
applying flux that contains zinc to entire surfaces of left side portions and right side portions of the plurality of heat transfer tubes;
assembling the fins;
applying flux that contains no zinc to entire surfaces of all the plurality of heat transfer tubes; and
performing in-furnace brazing in an electric furnace.
